# EUROPÄISCHE PATENTSCHRIFT

(11) **EP 0 603 448 B1**
(45) Veröffentlichungstag und Bekanntmachung des Hinweises auf die Patenterteilung: **26.08.1998**
(21) Anmeldenummer: 92811019.6
(22) Anmeldetag: 23.12.1992
(51) Int. Cl.: G01N 21/59, G01R 15/00

(54) **Handdensitometer**
Hand-held densitometer
Densitomètre pouvant être tenu à la main

(43) Veröffentlichungstag der Anmeldung: 29.06.1994
(73) Patentinhaber: GRETAG Aktiengesellschaft, CH-8105 Regensdorf (CH)
(72) Erfinder: Schrämmli, Fortunat, CH 5212 Hausen (CH)
(74) Vertreter: Schwabe - Sandmair - Marx

(56) Entgegenhaltungen:
- DE-A- 4 027 805
- US-A- 3 846 027
- US-A- 4 961 646
- DATABASE WPI Week 8132, Derwent Publications Ltd., London, GB; AN 81-H4353D & SU-A-780 068 (MAGN METAL WKS DES)

## Beschreibung

Die Erfindung betrifft ein Handdensitometer gemäss dem Oberbegriff von Patentanspruch 1.

Handdensitometer sind heutzutage gängige Hilfsmittel zur Messung der farblichen Zusammensetzung einer Vorlage. Solche Handdensitometer und spezielle Teile von solchen Handdensitometern sind beispielsweise bekannt aus der US-A-4,968,140 , aus der US-A-4,961,646 , oder aus der US-A-4,929,084. Derartige Handdensitometer umfassen eine Messeinrichtung zum Ausmessen der Vorlage, die bei den Densitometern, die in den genannten Druckschriften offenbart sind, einen Messkopf umfassen, der aus dem Gehäuse in eine Messposition ausfahrbar ist, in welcher er die farbliche Zusammensetzung der Vorlage in einem Punkt oder in einem Bereich misst. Dabei kann beispielsweise die Farbdichte der Vorlage in einer bestimmten Farbe in dem betreffenden Punkt oder Bereich gemessen werden. Die jeweils wählbare Messgrösse (im Beispiel: die Dichte) sowie der jeweilige Parameter (in, Beispiel: die spezielle Farbe, deren Dichte gemessen wird), werden auf einer Anzeigeeinheit, also auf einer grafischen Schnittstelle zum Benutzer, beispielsweise in Menüform auf einem kleinen Schirm, dargestellt und können mit Hilfe von Tasten aus dem jeweils angezeigten Menü ausgewählt werden bzw. es können mit Hilfe der Tasten auch andere Menüs, insbesonder den ausgewählten Menüs untergeordnete Menüs, aufgerufen werden. Ebenso kann nach Auswahl der zu messenden Grösse und der Parameter mit Hilfe der Tasten der Messvorgang ausgelöst werden, so dass nach der Messung auf dem Schirm die gemessene Grösse erscheint.

Die beschriebenen Handdensitometer sind an sich gut funktionierende Geräte, weisen aber noch gewisse Verbesserungsmöglichkeiten auf. So hat beispielsweise die Tastenlösung bei der Steuerung des Messvorgangs den Nachteil, dass die Geschwindigkeit beim Durchlaufen eines Menüs durch Drücken von Tasten (aufwärts- und abwärtslaufen im Menü) immer an die gleiche starre Umsetzungszeit gebunden ist, mit der der Druck auf eine Taste in die entsprechende Änderung insbesondere auf der Anzeigeeinheit umgesetzt wird. Der Benutzer hat auf diese Umsetzungszeit keinerlei Einfluss, kann diese Zeit also insbesondere nicht verkürzen.

Ausserdem hat ein entsprechender Tastenblock auch den Nachteil, dass er relativ umständlich und schwer mit einer Hand bedienbar ist. Es ist nämlich bei solchen Handdensitometern zu berücksichtigen, dass ein Benutzer in der Regel mit einer Hand die zu messende Vorlage festhalten muss, während die andere Hand zum Halten und zur Bedienung des Handdensitometers zur Verfügung steht. Das hat aber zur Folge, dass der Benutzer dann, wenn er mit der Hand das Densitometer festhalten muss, die Handstellung nur noch sehr wenig verändern kann. Erstreckt sich der Tastenblock räumlich einigermassen umfangreich, so ist seine Bedienung entsprechend schwer. Obendrein verbraucht der Tastenblock auch relativ viel Platz, der bei Handgeräten ohnehin äusserst knapp ist.

Grafische Benutzerschnittstellen sind auch auf dem Gebiet der Computer bekannt. Hier hat sich in besonderem Masse die wohlbekannte Maus als Zeige- und Steuerungsinstrument als geeignet erwiesen. Sie ist aber für Handgeräte insbesondere wegen der oben bereits angesprochenen Platzprobleme nicht praktikabel. Die Maus arbeitet mit einem zweidimensional steuerbaren "Trackball" (Kugel), der die Bewegung der Kugel in eine entsprechende Bewegung des Mauszeigers umsetzt. Eine solche Kugel, die vom Platzbedarf her der Tastenblocklösung klar überlegen ist, wird daher auch schon alleine als Zeige- und Steuerungsinstument in anderen Geräten für die Auswahl bestimmter Parameter oder Funktionen eingesetzt. So ist zum Beispiel eine derartige Kugel zur Auswahl bestimmter Sticharten in einer Nähmaschine mit der Typenbezeichnung "BERNINA® 1530 Inspiration" im Einsatz. Allerdings muss diese Nähmaschine immer auf eine Auflagefläche fest aufgestellt werden, sodass der Benutzer die Handstellung zur Bedienung der Kugel stets ohne Schwierigkeiten verändern kann. Aber selbst dann hat eine solche Kugel immer noch den Nachteil, dass bei einer geringen Bewegungen der Kugel sich der angewählte Parameter vergleichsweise leicht verändern kann, da ein Änderung der Position der Kugel, egal in welcher Richtung, eine entsprechende Änderung der Position des Zeigers im Menü zur Folge hat. Dadurch wird die Auswahl einzelner Optionen oder Parameter im Menü erschwert, da die genaue Ansteuerung der jeweiligen Option oder des jeweiligen Parameters im Menü mit Hilfe der Kugel vergleichsweise schwierig ist.

Es ist daher eine Aufgabe der Erfindung, die genannten Nachteile zu beseitigen und ein Handdensitometer mit einem Zeige- und Steuerungsinstrument bereitszustellen, welches auch dann einfach bedienbar ist und eine sichere Auswahl der Messfunktionen, von Parametern oder beispielsweise von einzelnen Optionen eines Menüs erlaubt, wenn der Benutzer nur eine Hand zum Halten und zum Bedienen des Densitometers zur Verfügung hat.

Diese Aufgabe wird erfindungsgemäss durch die Merkmale des kennzeichnenden Teils von Anspruch 1 gelöst. Die Steuereinrichtung des Handdensitometers umfasst ein Handrad, welches von ausserhalb des Gehäuses drehbar ist, wobei durch Drehen des Handrads Messfunktionen, die zu messenden Grössen sowie die Parameter für die Messung wählbar sind. Ein solches Handrad weist Vorteile in mehrerer Hinsicht auf. Zum einen beschränkt sich die Möglichkeit einer Veränderung der Messfunktion, des angewählten Parameters oder der angewählten Grösse auf nur "eine" Dimension - das Handrad ist nur in "einer" Ebene um eine ortsfeste Achse drehbar-sodass die Einstellung der gewünschten Messfunktion, des gewünschten Parameters oder der gewünschten Grösse erheblich leichter ist als bei einer Kugel. Dies erleichtert die Bedienung des Densitometers erheblich und zwar insbesondere dann, wenn der Benutzer mit der gleichen Hand das Densitometer halten und bedienen muss, sodass ihm im Extremfall nur ein Finger zur Bedienung des Densitometers zur Verfügung steht. Auch in solchen Extremfällen ist es also möglich, das erfindungsgemässe Densitometer bequem zu bedienen.

Ein derartiges Densitometer bietet darüber hinaus aber noch einen weiteren Vorteil: Da das Handrad die Drehbewegung sehr schnell in ein entsprechendes Signal umsetzt, kann auch ein Menü auf dem Schirm der Anzeigeeinheit entsprechend schnell durchlaufen werden. Wenn also mehrere Optionen übersprungen werden müssen, um zur gewünschten Option zu gelangen, braucht der Benutzer nur das Handrad entsprechend schnell zu drehen.

Das erfindungsgemässe Handdensitometer umfasst eine magnetische Rastung, welche das Handrad in eine Raststellung bewegt, wenn es sich in einer von der Raststellung verschiedenen Stellung befindet, und welche das Handrad stabil hält, wenn es sich in der Raststellung befindet. Dies ist vorteilhaft im Hinblick darauf, dass das Handrad nicht in einer "Zwischenstellung" zwischen zwei Optionen stabil stehen bleiben kann, sondern dass die Rastung das Handrad immer in eine Raststellung bewegt. Der Raststellung ist eine entsprechende Option im Menü zugeordnet, sodass sich das Gerät immer in einem genau definierten Zustand befindet. Wenn also in einer Raststellung eine Option, ein Parameter oder ein Grösse ausgewählt ist, kann sich das Rad nicht ohne weiteres drehen. Dementsprechend kann sich auch die ausgewählte Option, der ausgewählte Parameter oder die ausgewählte Grösse nicht ohne weiteres verändern.

Ein Ausführungsbeispiel des erfindungsgemässen Handdensitometers umfasst einen Stator mit einem hohlzylindrischen Statorkörper. Der Statorkörper ist rotationssymetrisch um die Längsachse des Handrads herum angeordnet. Die magnetische Rastung ist hier derart ausgebildet, dass der Statorkörper entlang seines Umfangs in einer Teilung mit gleichen Abständen wechselnde magnetische Pole aufweist, und dass gleichzeitig das Handrad ein im wesentlichen hohlzylindrisches Rotorrohr umfasst, welches koaxial zum Statorkörper angeordnet ist und diesen umgibt. Das Rotorrohr ist dabei auf seiner Innenwand mit einer auf den Statorkörper zuweisenden Verzahnung versehen, die die gleiche Zahnteilung aufweist wie die Teilung der magnetischen Pole auf dem Umfang des Statorkörpers. Immer dann wenn ein magnetischer Pol des Statorkörpers gegenüber einem Zahn des Rotorrohrs zu liegen kommt, liegt eine stabile Raststellung vor. Dieses Ausführungsbeispiel zeichnet sich durch seinen einfachen Aufbau und die einfache und auch kostengünstige Herstellbarkeit der einzelnen Teile aus. Ausserdem werden bei dieser Ausgestaltung instabile Zwischenstellungen des Handrads vermieden.

Ein anderes Ausführungsbeispiel des erfindungsgemässen Handdensitometers umfasst zwei Statorscheiben, die parallel zueinander angeordnet sind und sich jeweils in einer Ebene senkrecht zur Längsachse des Handrads rotationssymetrisch um diese Achse herum erstrecken. Die beiden Statorscheiben sind durch einen ringförmigen Magneten miteinander verbunden, dessen Magnetfeld im wesentlichen in Richtung der Längsachse des Handrads weist. Die magnetische Rastung ist bei diesem Ausführungsbespiel so ausgebildet, dass das Handrad ein im wesentlichen hohlzylindrisches Rotorrohr umfasst, das koaxial zu den Statorscheiben angeordnet ist und diese umgibt und die Statorscheiben mit einer nach aussen weisenden Verzahnung versehen sind. Das Rotorrohr ist ausserdem auf seiner Innenwand mit zwei Verzahnungen gleicher Zahnteilung wie die der Statorscheiben versehen und die jeweilige Verzahnung auf der Innenwand des Rotorrohrs ist koaxial zur entsprechenden Verzahnung der Statorscheibe angeordnet. Jedesmal, wenn also die Zähne der Verzahnungen auf der Innenwand des Rotorrohrs und die nach aussen weisende Verzahnung der Statoren einander gegenüber zu liegen kommen, ist der Luftspalt zwischen Rotorrohr und Stator minimal und der magnetische Kreis geschlossen - diese Stellung entspricht dann der stabilen Raststellung. Dieses Ausführungsbeispiel zeichnet sich dadurch aus, dass es einfach zu realisieren ist. Zusätzlich werden auch bei diesem Ausführungsbeispiel natürlich instabile Zwischenstellungen vermieden.

Das erfindungsgemässe Handdensitometer kann so weitergebildet sein, dass die Statorscheiben bzw. der magnetisierte Stator auf einer Lagerhülse aufsitzend befestigt sind, und dass das Rotorrohr mit einer zentralen Welle versehen ist, die in der Lagerhülse drehbar gelagert ist und zusammen mit den, Rotorrohr gegenüber der Lagerhülse drehbar ist. Diese Welle ist mit einer Detektionseinheit verbunden, welche die jeweilige Stellung und die Drehrichtung des Rotorrohrs detektiert und ein entsprechendes Signal erzeugt und zur Auswertelektronik leitet. Bei diesem Ausführungsbeispiel kann mit Hilfe der Detektionseinheit die jeweilige Stellung des Rotorrohrs detektiert werden und diese Stellung in ein entsprechendes elektrisches Signal umgewandelt werden, sodass zum Beispiel auf diese Weise einfach ein Menü durchlaufen werden kann, indem nur das Rotorrohr vom Benutzer in die gewünschte Richtung gedreht wird.

Die Detektionseinheit kann zwei ortsfest angeordnete Lichtschranken und eine mit der zentralen Welle des Rotorrohrs verbundene gezahnte Scheibe umfassen. Die gezahnte Scheibe ist zwischen Lichtquelle und Empfänger der Lichtschranken angeordnet. Die beiden Lichtschranken selbst sind relativ zueinander so angeordnet, dass das von der einen Lichtschranke erzeugte Signal phasenverschoben gegenüber dem von der anderen Lichtschranke erzeugten Signal ist. Insbesondere sind die Lichtschranken relativ zueinander so angeordnet, dass die von der jeweiligen Lichtschranke erzeugten Signale uni 90° gegeneinander phasenverschoben sind. Mit Hilfe der beiden phasenverschobenen Signale ist es nämlich möglich, auf einfache Weise festzustellen, in welche Richtung das Handrad gedreht wird, je nachdem welches Signal dem anderen nacheilt bzw. vorauseilt.

Die Lichtschranken können dabei so realisiert sein, dass die Lichtquelle als Leuchtdiode und der Empfänger als Photodiode ausgebildet ist. Zwischen der Leuchtdiode und der Photodiode ist noch eine Schlitzblende angeordnet, deren Schlitz schmal gegenüber der Breite eines Zahns der gezahnten Scheibe ist, die mit dem Rotorrohr verbundenen ist. Dadurch wird einerseits erreicht, dass das jeweils erzeugte Signal sehr steil ansteigende und abfallende Flanken aufweist, die sehr einfach detektiert werden können. Dies hat zur Folge, dass die jeweilige Position des Rotorrohrs genau detektiert werden kann und in eine entsprechende Anzeige auf der Anzeigeeinheit umgewandelt werden kann. Zum anderen wird verhindert, dass eventuell vorhandenes schräg einfallendes Fremdlicht vom Detektor als Lichtsignal von der zugeordneten Leuchtdiode gedeutet werden kann, da es von der Schlitzblende weitestgehend abgeschirmt wird.

Ein weiteres Ausführungsbeispiel des erfindungsgemässen Handdensitometers zeichnet sich dadurch aus, dass die Steuereinrichtung eine Abschalt- und Aufweckelektronik umfasst, welche die Energieversorgung zumindest von Teilen des Handdensitometers nach Ablauf eines definierten Zeitintervalls, in welchem keine Zustandsänderung des Handdensitometers erfolgt ist, aus dem Betriebszustand in einen Bereitschaftszustand schaltet. Dieser Aspekt der Erfindung ist doch sehr wesentlich, wie die folgenden Überlegungen zeigen. Handgeräte sind in der Regel batteriebetrieben oder mit aufladbaren Akkumulatoren ausgestattet und der Energiebedarf eines solchen Geräts im Dauerbetriebszustand ist doch einigermassen hoch (insbesondere auch der Energieverbrauch durch die Lichtschranken). Die beschriebene Massnahme hilft daher, den Energieberbrauch zu reduzieren, solange das Gerät nicht benutzt wird. Dadurch bleibt das Gerät erheblich länger einsatzbereit, als wenn es ständig im Betriebszustand wäre und die Batterien bzw. Akkumulatoren die volle Energie bereitstellen müssten. Auf der anderen Seite soll das Gerät natürlich möglichst umgehend voll einsatzbereit sein, wenn der Benutzer es einsetzen möchte. Zu diesem Zweck sind Aufweckmittel vorgesehen, die die Energieversorgung bei einer Zustandsänderung des Handdensitometers sofort wieder in den Betriebszustand schalten.

Diese Aufweckmittel können eine koaxial zum ringförmigen Magneten angeordnete Spule umfassen, die bei einer Änderung des magnetischen Flusses, der sie durchdringt, ein entsprechendes Signal erzeugt und an die Abschalt- und Aufweckelektronik leitet. Diese Lösung zeichnet sich durch geringen Aufwand aus, weist aber andererseits eine geringe Ansprechzeit auf. Je nach gewünschter Emfpindlichkeit kann schon bei geringen Änderungen des magnetischen Flusses durch die Spule die Energieversorgung schnell und zuverlässig wieder in den Betriebszustand geschaltet werden.

Im folgenden wird die Erfindung anhand der Zeichnung näher erläutert. Es zeigen, teilweise in schematischer und/oder in Schnittdarstellung:
- Fig. 1: ein Ausführungsbeispiel eines erfindungsgemässen Handdensitometers in Seitenansicht,
- Fig. 2: das Ausführungsbeispiel des Handdensitometers aus Fig. 1 in einer Aufsicht,
- Fig. 3: ein Ausführungsbeispiel der magnetischen Rastung des erfindungsgemässen Handdensitometers,
- Fig. 4: einen Schnitt entlang der Linie IV-IV der Fig. 3,
- Fig. 5: eine Ansicht gemäss dem Pfeil V der Fig. 3,
- Fig. 6: eine Aufsicht gemäss dem Pfeil VI der Fig. 3,
- Fig. 7: ein weiteres Ausführungsbeispiel der magnetischen Rastung des erfindungsgemässen Handdensitometers
und
- Fig. 8: ein Ausführungsbeispiel einer Abschalt- und Aufweckelektronik und anderer elektronischer Details des erfindungsgemässen Handdensitometers

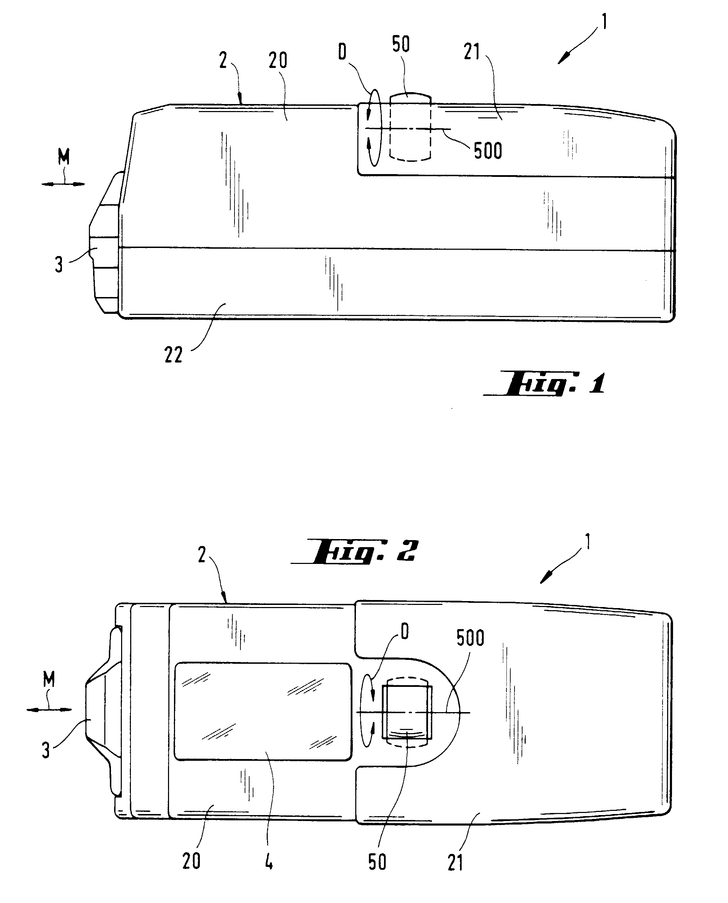

In den Fig. 1 und 2 ist ein Ausführungsbeispiel des erfindungsgemässen Handdensitometers 1 dargestellt. Es umfasst ein Gehäuse 2 mit mehreren Gehäuseteile 20,21 und 22, und eine Messeinrichtung, deren Messkopf 3 zu erkennen ist. Der Messkopf 3 ist zur Durchführung des Messvorgangs in Richtung der Pfeile M aus dem Gehäuse 2 ausfahrbar und anschliessend wieder in seine Ruheposition, wie sie in Fig. 1 und 2 dargestellt ist, einfahrbar. Ferner umfasst das Handdensitometer 1 noch eine Anzeigeeinheit 4 sowie ein Handrad 50, das in Richtung der Pfeile D drehbar ist. Die Funktion des Handrads 50 und sein Zusammenwirken mit der Anzeigeeinheit 4 wird im folgenden noch detaillierter beschrieben.

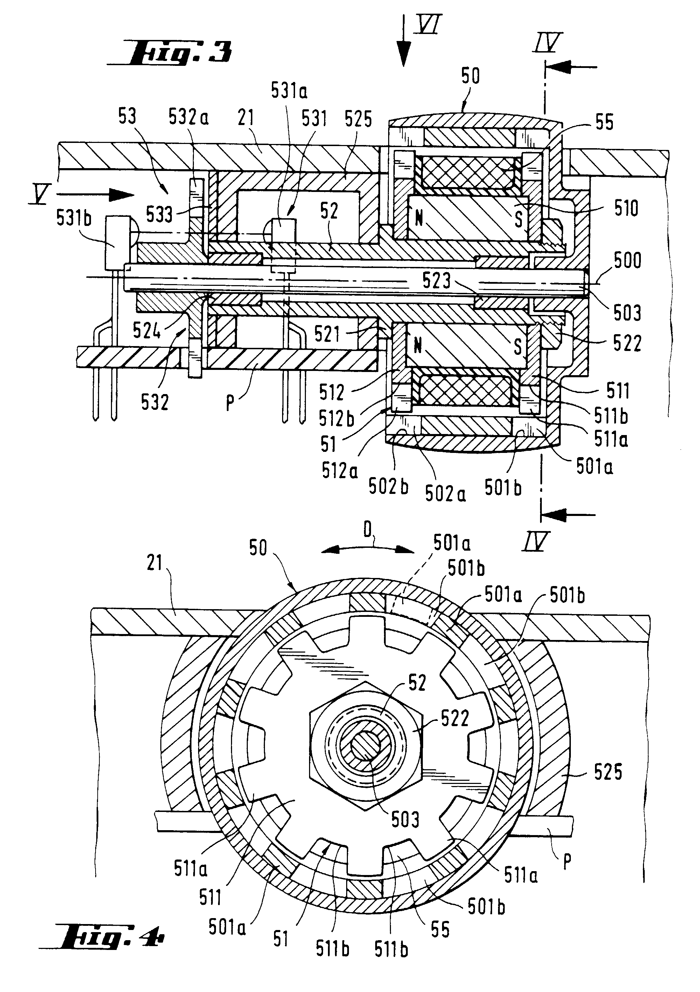

In Fig. 3 ist das anhand der Erläuterung der Fig. 1 und 2 bereits angesprochene Handrad 50 erneut zu erkennen. Das Handrad 50 ist als hohlzylindrisches Rotorrohr ausgebildet, welches einen Stator 51 koaxial umgibt. Der Stator 51 umfasst zwei Statorscheiben 511 und 512 sowie einen rohr- oder ringförmigen Magneten 510. Die beiden Statorscheiben 511 und 512 sind parallel zueinander angeordnet und erstrecken sich jeweils senkrecht zur Längsachse 500 des Handrads 50. Durch den ringförmigen Magneten 510 sind sie miteinander verbunden. Das Magnetfeld des Magneten 510 erstreckt sich im wesentlichen in Richtung der Längsachse 500 des Handrads. Dies ist in Fig. 3 dadurch beispielhaft angedeutet, dass am einen Ende ein magnetischer Nordpol N und am anderen Ende ein magnetischer Südpol S angedeutet ist. Sowohl die beiden Statorscheiben 511 und 512 als auch der ringfömige Magnet 510 sind auf einer Lagerhülse 52 fixiert, die rotationssymmetrisch, also koaxial in bezug auf die Längsachse 500 des Handrads (Rotorrohrs) 50 angeordnet ist. Dadurch sind auch die Statorscheiben 511 und 512 sowie der ringförmige Magnet 510 koaxial zu dieser Achse angeordnet. Die Fixierung der Statorscheiben und des Magneten kann beispielsweise mit Hilfe eines Anschlags 521 auf der Lagerhülse 52 und mit Hilfe einer Mutter 522 realisiert sein. Das Handrad 50 ist mit einer zentralen Welle 503 versehen, die durch zwei Lager 523 und 524 innen in der Lagerhülse 52 gelagert ist. Dadurch ist die Drehbarkeit der Welle 503 relativ zur Lagerhülse 52 und damit auch die Drehbarkeit des Handrads 50 relativ zum gesamten Stator 51 gewährleistet.

Die beiden Statorscheiben 511 und 512 sind mit einer nach aussen weisenden Verzahnung versehen, welche einzelne Zähne 511a und 512a und entsprechende Zahnzwischenräume 511b und 512b umfasst, die immer in gleichen Abständen aufeinander folgen und so eine gleichmässige Zahnteilung festlegen. Das Rotorrohr 50 ist auf seiner Innenwand mit zwei entsprechenden Verzahnungen versehen, die ebenfalls einzelne Zähne 501a und 502a sowie Zahnzwischenräume 501b und 502b umfassen, die ebenfalls eine Zahnteilung festlegen. Die Verzahnungen auf der Innenwand des Rotorrohrs 50 sind dabei koaxial zur jeweiligen Verzahnung der Statorscheiben 511 und 512 angeordnet. Die Zahnteilung der Verzahnungen der Statorscheiben 511 und 512 und die Zahnteilung der Verzahnungen auf der Innenwand des Rotorrohrs 50 sind gleich.

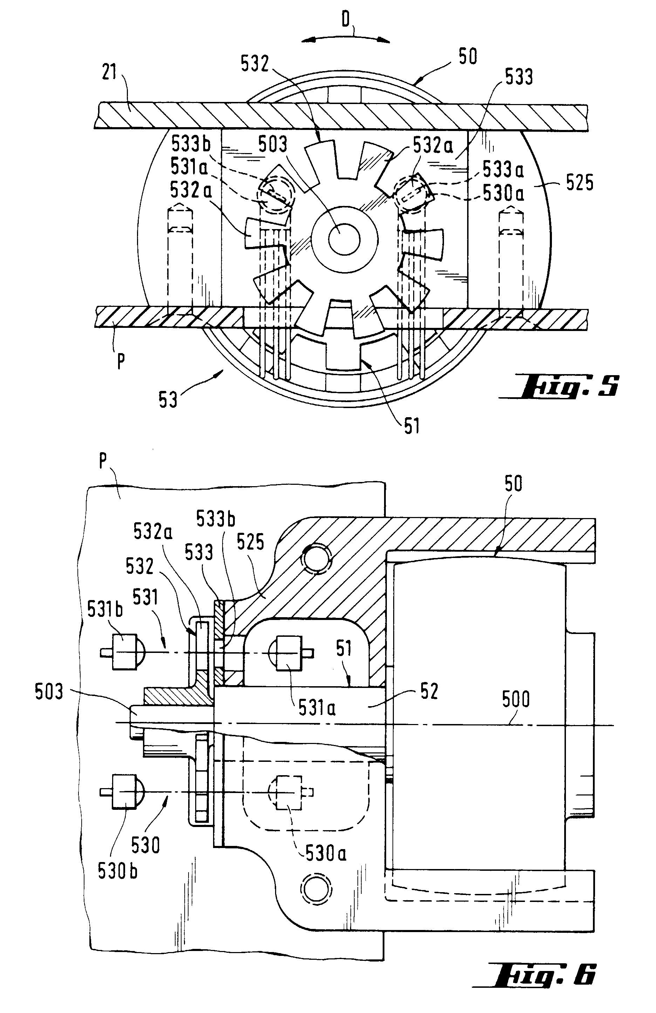

Dies ist besonders gut aus Fig. 4 erkennbar, in welcher ein Schnitt längs der Linie IV-IV dargestellt ist. In dieser Figur stehen die Zähne 511a der Statorscheibe 511 den Zähnen 501a der Verzahnung auf der Innenwand des Rotorrohrs 50 genau gegenüber. Dadurch ist der Luftspalt zwischen diesen Zähnen minimal, und der magnetische Kreis durch die beiden Zähne hindurch, weiter durch das Rotorrohr 50, durch die Zähne 502a des Rotorrohrs und 512a der anderen Statorscheibe 512 hindurch und schliesslich durch den ringförmigen Magneten, der die beiden Statorscheiben 511 und 512 verbindet, ist geschlossen. Auf diese Weise ist eine magnetische Rastung realisiert, bei der sich in der in Fig. 4 gezeigten Anordnung das Handrad 50 in der stabilen Raststellung befindet. Befindet sich das Handrad in einer Stellung, in welcher sich die Zähne der Verzahnungen nicht gegenüberstehen (in Fig. 4 ist ein Zahn in einer solchen Stellung strichliert angedeutet), dann ist der magnetische Kreis nicht geschlossen bzw. es wirkt ein Drehmoment auf das Handrad, welches es in die stabile Raststellung bewegt.

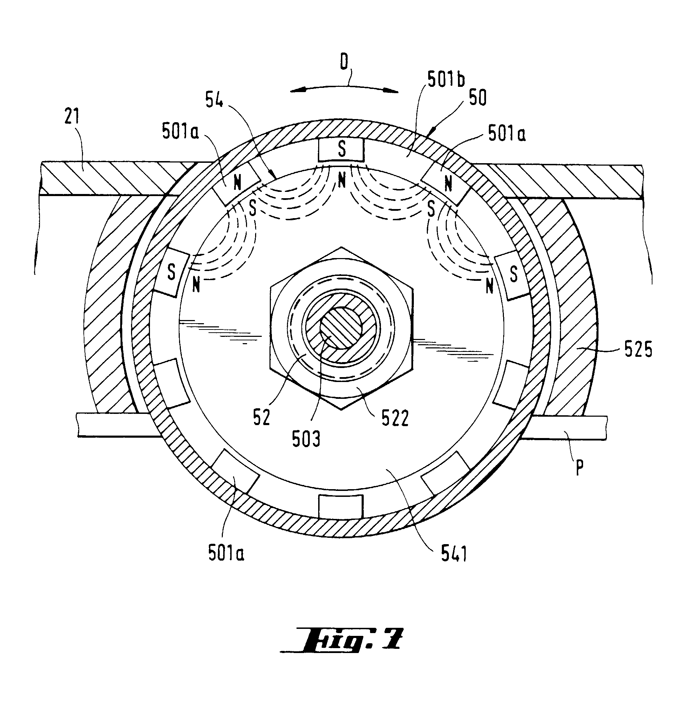

Mit der Welle 503 des Handrads 50 ist eine Detektionseinheit 53 verbunden. Diese Detektionseinheit ist in Fig. 3, in Fig. 5 und in Fig. 6 zu erkennen. Sie detektiert die jeweilige Stellung und die Drehrichtung des Rotorrohrs 50 und leitet ein entsprechendes Signal an eine Auswertelektronik, die weiter unten noch genauer erläutert wird. Die Detektionseinheit 53 umfasst zwei ortsfest angeordnete Lichtschranken 530 und 531, die jeweils eine in einer Abschirmung 525 gegen Fremdlicht angeordnete Leuchtdiode 530a bzw. 531a als Lichtquelle sowie eine Photodiode 530b bzw. 531b als Empfänger umfasst. Die Anschlussdrähte dieser Dioden sind mit einer Platine P verbunden (Fig. 3). Zwischen den Lichtschranken 530 und 531 ist eine gezahnte Scheibe 532 angeordnet, deren Zahnteilung in diesem Ausführungsbeispiel gleich ist wie die Zahnteilung der Verzahnungen der Statorscheiben bzw. des Rotorrohrs (Fig. 5). Ferner ist zwischen den Lichtschranken auch noch eine Schlitzblende 533 angeordnet, deren Schlitze 533a und 533b sehr schmal gegenüber der Breite eines Zahns der gezahnten Scheibe 532 ist. Die Schlitzblende 533 ist ortsfest mit der Abschirmung 525 verbunden.

Die Funktionsweise der Detektionseinheit 53 lässt sich anhand der Fig. 5 und der Fig. 6 gut erläutern. Dabei soll davon ausgegangen werden, dass das Handrad im Uhrzeigersinn gedreht wird. Die gezahnte Scheibe 532 beginnt in der gezeigten Stellung gerade, das Licht der Leuchtdiode 531a (Fig. 6) durch den Schlitz 533b hindurch freizugeben, so dass es die zugehörige Photodiode 531b (Fig. 6) beaufschlagt, die dann ein entsprechendes elektrisches Signal erzeugt. Das Signal weist wegen des schmalen Schlitzes 533b eine entsprechend steile ansteigende (bei invertiert vorliegendem Signal eine abfallende) Flanke auf. Dadurch ist der Zeitpunkt, zu dem die Flanke auftritt, elektronisch genau detektierbar. Der Schlitz 533a hingegen ist in der gezeigten Stellung der gezahnten Scheibe 532 von einem Zahn 532a der Scheibe 532 verdeckt, so dass das Licht der Leuchtdiode 530a (Fig. 6) nicht die zugehörige Photodiode 530b (Fig. 6) beaufschlagen kann.

Dreht man das Handrad im Uhrzeigersinn weiter, so detektiert die Photodiode 530b eine kurze Zeit nachdem die Photodiode 531b die ansteigende Flanke detektiert hat ebenfalls eine ansteigende Flanke. Dies erfolgt nämlich dann, wenn der Zahn 532a, der in der gezeigten Stellung der Scheibe 532 den Lichtdurchtritt auf die Photodiode 530b noch verhindert, den Lichtdurchtritt auf die Photodiode 530b freigibt. Im gezeigten Ausführungsbeispiel sind die Lichtschranken 530 und 531 so angeordnet, dass die Phasenverschiebung der Signale 90° beträgt. Diese Phasenverschiebung ist besonders einfach zu detektieren. Mit dem gezeigten Ausführungsbeispiel der Detektionseinheit 53 ist es besonders einfach, die Drehgeschwindigkeit des Handrads mit Hilfe der Anzahl der während eines bestimmten Zeitraums detektierten Flanken zu ermitteln. Ebenso einfach ist es möglich, die Drehrichtung des Handrads mit Hilfe der Phasenverschiebung der von den Lichtschranken erzeugten Signale zu ermitteln, indem nämlich einfach ermittelt wird, welches Signal dem anderen vorauseilt, im beschriebenen Fall um 90°.

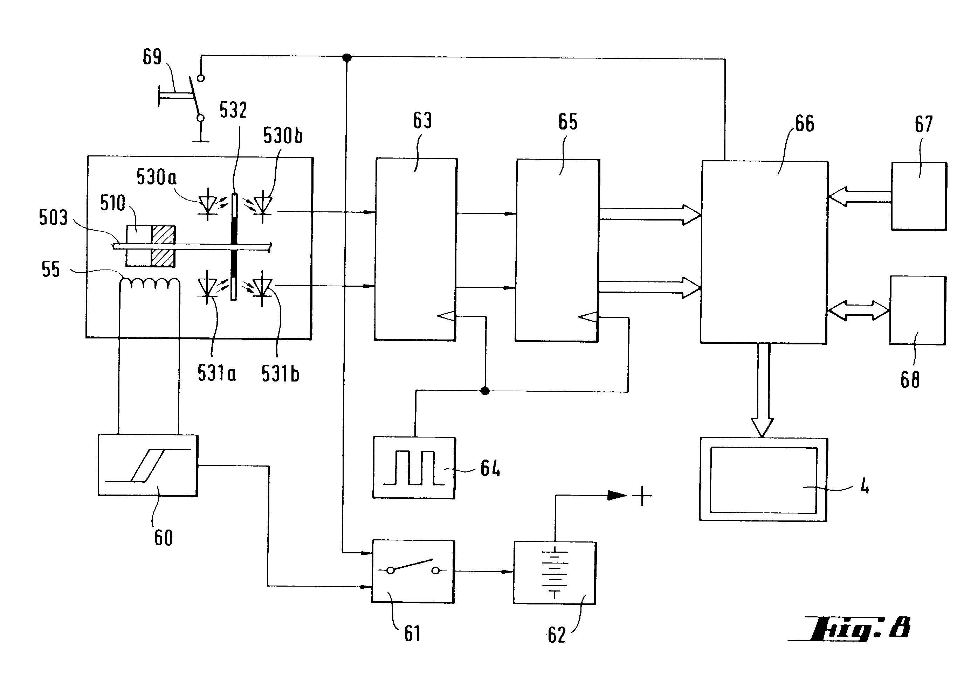

Ein weiteres Ausführungsbeispiel der magnetischen Rastung ist in Fig. 7 zu erkennen. Im Prinzip entspricht diese Darstellung der Darstellung in Fig. 4, lediglich der Stator 54 ist anders als der in Fig. 4 dargestellte Stator 51 ausgebildet. Der in Fig. 7 dargestellte Stator 54 weist nämlich einen lateral magentisierten Statorkörper 541 auf, der so magnetisiert ist, dass eine Magnetisierung vorliegt, die entlang dem Umfang des Statorkörpers in einer Teilung mit gleichen Abständen wechselnde magnetische Pole, magnetische Nordpole N und magnetische Südpole S, aufweist. Die Teilung der wechselnden magnetischen Pole N und S entspricht dabei der Zahnteilung der Verzahnung auf der Innenwand des Rotorrohrs 50. Der magnetische Kreis erstreckt sich also von einem beliebigen Pol des Statorkörpers 541 aus betrachtet durch den diesem Pol gegenüberliegenden Zahn auf der Innenwand des Rotorrohrs 50, weiter durch das Rotorrohr 50 hindurch bis zum benachbarten Zahn, und durch den benachbarten Zahn hindurch wieder in den Statorkörper 541 zurück. Auch hier ist der magnetische Kreis dann geschlossen, wenn ein Pol des Statorkörpers 541 einem Zahn der Verzahnung auf der Innenwand des Rotorrohrs gegenüber zu liegen kommt. Dann befindet sich das Rotorrohr 50 in der stabilen Raststellung. Ansonsten wirkt ein Drehmoment auf das Rotorrohr 50, welches es in die Raststellung bewegt, ähnlich wie bei dem anhand von Fig. 4 erläuterten Ausführungsbeispiel. Wird das Rotorrohr oder Handrad 50 aus einer Raststellung weiterbewegt in die nächste Raststellung, so "wechselt" auch die Verteilung der Pole in den Zähnen der Verzahnung mit (die Nord- und die Südpole wechseln), da in der nächsten Raststellung der gleiche Zahn, der vorher einem magnetischen Nordpol gegenüber gelegen ist, jetzt einem magnetischen Südpol gegenüber liegt.

An dieser Stelle soll noch auf einen wesentlichen weiteren Aspekt der Erfindung hingewiesen werden, der bei beiden beschriebenen Ausführungsbeispielen ausgenutzt werden kann, der aber der Einfachheit halber nur für das zuerst beschriebene Ausführungsbeispiel zeichnerisch dargestellt ist. Dabei handelt es sich um eine Spule 55 (Fig. 3), die koaxial um den ringförmigen Magneten 510 herum angeordnet ist. Sobald das Handrad bzw. Rotorrohr 50 gedreht wird, ändert sich der magnetische Fluss durch die Spule 55 und induziert eine elektrische Spannung. Diese induzierte Spannung wird einer Abschalt- und Aufweckelektronik zugeführt, die im folgenden anhand der Fig. 8 noch genauer beschrieben wird. Mit Hilfe der Spule 55 und der im folgenden beschriebenen Abschalt- und Aufweckelektronik kann nach Ablauf eines definierten Zeitintervalls, in welchem keine Zustandsänderung des Geräts erfolgt ist, das Gerät aus dem Betriebszustand in einen Bereitschaftszustand ("stand-by") geschaltet werden. Sobald aber das Handrad bewegt wird, ändert sich der magnetische Fluss durch die Spule 55, es wird eine Spannung in ihr induziert, und als Folge wird mit Hilfe der Abschalt- und Aufweckelektronik das Gerät sofort wieder in den Betriebszustand geschaltet. Diese Massnahme erhöht die Dauer der Einsatzbereitschaft des Geräts, da derartige Geräte in der Regel mittels Batterien oder Akkumulatoren mit Energie versorgt werden. Auf der anderen Seite weisen alleine die Lichtschranken 530 und 531 im Dauerstrichbetrieb einen so erheblichen Energiebedarf auf, dass die in den Batterien oder Akkumulatoren gespeicherte Energie innerhalb eines vergleichsweise kurzen Zeitraums aufgebraucht wäre. Durch die Spule 55 und die Abschalt- und Aufweckelektronik kann also der Zeitraum, während dem das Gerät einsatzbereit ist, erheblich verlängert werden. Gleichzeitig ist das Gerät wie ein Gerät, das während des ganzen Zeitraums eingeschaltet ist, bei einer entsprechenden Zustandsänderung sofort einsatzbereit.

Ein Ausführungsbeispiel der Abschalt- und Aufweckelektronik sowie einiger anderer elektronischer Details sind schematisch in Fig. 8 dargestellt. Die Abschalt- und Aufweckelektronik umfasst dabei einen Komparator 60 sowie eine Abschalt- und Aufweckschaltung 61, die mit der Energieversorgung 62 verbunden ist. Der Ausgang der Energieversorgung 62 ist nur nur symbolisch mit einem "+" gekennzeichnet, was anzeigen soll, dass von dieser Energieversorgung aus diverse (Energie-) Verbraucher im Gerät versorgt werden. In der Spule 55 wird bei einer Änderung des magnetischen Flusses durch sie (z.B. bei einer Drehung des Handrads 50) eine Spannung induziert, welche den Komparator 60 schaltet. Dieser wiederum aktiviert als Folge die Abschalt- und Aufweckschaltung 61, welche sofort die Energieversorgung 62 aktiviert.

Ferner sind in Fig. 8 auch die beiden Leuchtdioden 530a und 531a sowie die entsprechenden Photodioden 530b und 531b angedeutet. Die Ausgangssignale der Photodioden 530b und 531b sind mit einem Schaltwerk 63 verbunden, welches getaktet von einem Oszillator 64 die Phasenlage der Signale, die von den Photodioden 530b und 531b erzeugt werden, miteinander vergleicht, und je nach Phasenlage einen Zähler 65 inkrementiert oder dekrementiert. Ein Prozessor 66 liest den Zählerstand zyklisch aus. In einem Festspeicher (ROM) 67 ist eine Sowftware gespeichert, die aufgrund des Zählerstands jeweils über die aktuelle Position des Handrads informiert ist. Eine Veränderung dieser Position setzt der Prozessor 66 dann jeweils in eine entsprechende Änderung der selektierten Menüzeile oder in ein Inkrementieren oder Dekrementieren eines Wertes in einem änderbaren Speicher (RAM) 68 um und führt ein entsprechendes Signal der Anzeigeeinheit 4 zu, die dann eine entsprechende Anzeige liefert. Es ist auf diese Weise also sehr einfach möglich, auf der Anzeigeeinheit 4 durch Drehen des Handrads 50 ein Menü zu durchlaufen oder den Wert eines gewünschten Parameters zu ändern, wobei diese Änderung jeweils sofort auf der Anzeigeeinheit 4 angezeigt wird.

Soll ein Messvorgang initiiert werden, so kann dies mit Hilfe eines symbolisch angedeuteten Tasters 69 erfolgen. Dieser Taster 69 ist einerseits mit dem Prozessor 66 verbunden, um ihm "mitzuteilen", dass jetzt eine Messung erfolgen soll, andererseits ist er auch mit der Abschalt- und Aufweckschaltung 61 verbunden. Falls das Gerät nämlich in der Bereitschaftstellung ist, muss es sofort in den Betriebszustand geschaltet werden, damit die Messung erfolgen kann. Mit Hilfe des Tasters sind also einzelne Menüoptionen auswählbar bzw. es sind Parameter wählbar. Dies ist allerdings nur dann möglich, wenn sich das Handrad 50 in einer stabilen Raststellung befindet, wie bereits weiter oben ausführlich erläutert ist.

Bei dem anhand von Fig. 7 erläuterten Ausführungsbeispiel mit dem lateral magnetisierten Statorkörper 541 kann eine Änderung der Position des Handrads 50 auf eine andere Weise detektiert werden und dementsprechend kann sofort die Energieversorgung 62 aus dem Bereitschaftszustand ("stand-by") in den Betriebszustand geschaltet ("aufgeweckt") werden. Hierzu sind die Lichtschranken 530 und 531 zwar ständig in Betrieb, aber nur derart, dass sie gepulst betrieben werden, dass also beispielsweise die Lichtschranken fünfzig mal in der Sekunde für einige Mikrosekunden eingeschaltet und dann wieder ausgeschaltet werden. Der Energieverbrauch der Lichtschranken ist bei einem derartigen Betrieb im Bereitschaftszustand ebenfalls sehr gering. Das Aufwecken kann durch Auslesen des Zählers 65 erfolgen. Wenn sich der Stand des Zählers 65 ändert - er ändert sich ja nur dann, wenn auch das Schaltwerk 63 eine geänderte Phasenlage der Signale detektiert, die von den Photodioden 530b und 531b kommen - dann wird die Energieversorgung 62 sofort wieder in den Betriebszustand geschaltet. Diese Art und Weise des Aufweckens zeichnet sich ausserdem ebenfalls geringen Energieverbrauch auch dadurch aus, dass sie bei einer entsprechend hohen Pulsfrequenz auch sehr schnell reagieren kann und das Gerät aus dem Bereitschaftszustand ("stand-by") in den Betriebszustand schalten kann.

Das erfindungsgemässe Densitometer weist somit Vorteile in mehrerer Hinsicht auf. Zum einen beschränkt sich die Möglichkeit einer Veränderung des angewählten Parameters oder der angewählten Grösse auf nur "eine" Dimension - das Handrad ist nur in "einer" Ebene um eine ortsfeste Achse drehbar - sodass eine die Einstellung des gewünschten Parameters oder der gewünschten Grösse erheblich leichter ist als bei einer Kugel. Dies erleichtert die Bedienung des Densitometers erheblich und zwar insbesondere dann, wenn der Benutzer mit der gleichen Hand das Densitometer halten und bedienen muss, sodass ihm im Extremfall nur ein Finger zur Bedienung des Densitometers zur Verfügung steht. Auch in solchen Extremfällen ist es also möglich, das erfindungsgemässe Densitometer bequem zu bedienen.

Ein derartiges Densitometer bietet darüber hinaus aber noch weitere Vorteile: Da das Handrad die Drehbewegung sehr schnell in ein entsprechendes Signal umsetzt, kann auch ein Menü auf dem Schirm der Anzeigeeinheit entsprechend schnell durchlaufen werden. Wenn also mehrere Optionen übersprungen werden müssen, um zur gewünschten Option zu gelangen, braucht der Benutzer nur das Handrad entsprechend schnell zu drehen.

Weiterhin kann das Handrad nicht in einer "Zwischenstellung" zwischen zwei Optionen stabil stehen bleiben, sondern die Rastung bewegt das Handrad immer in eine Raststellung. Der Raststellung ist eine entsprechende Option im Menü zugeordnet, sodass sich das Gerät immer in einem genau definierten Zustand befindet. Wenn also in einer Raststellung eine Option, ein Parameter oder eine Grösse ausgewählt ist, kann sich das Rad nicht ohne weiteres drehen. Dementsprechend kann sich auch die ausgewählte Option, der ausgewählte Parameter oder die ausgewählte Grösse nicht ohne weiteres verändern.

Mit Hilfe der Lichtschranken kann auf einfach Weise die Drehrichtung und Drehgeschwindigkeit des Handrads detektiert und in eine entsprechende Anzeige umgesetzt werden. Die Abschalt- und Aufweckelektronik ermöglicht eine längere Einsatzbereitschaft des Handdensitometers, da derartige Geräte in der Regel mit einer Energieversorgung auf der Basis von Batterien oder Akkumulatoren ausgestattet sind.

## Patentansprüche

1. Handdensitometer zur Messung der farblichen Zusammensetzung einer Vorlage. mit einem Gehäuse (2), in welchem eine Meßeinrichtung zum Ausmessen der Vorlage, eine Steuereinrichtung zur Steuerung der Meßfunktionen, insbesondere zur Wahl der zu messenden Größen und der Parameter für das Ausmessen der Vorlage, sowie eine Auswertelektronik und eine Anzeigeeinheit (4) vorgesehen ist, die die gewählten Meßfunktionen, Größen bzw. Parameter anzeigt, dadurch **gekennzeichnet**, daß
a) die Steuereinrichtung ein Handrad (50) umfaßt, welches von außerhalb des Gehäuses (2) drehbar ist. wobei durch Drehen des Handrads (50) die Meßfunktionen, die zu messenden Größen sowie die Parameter für die Messung wählbar sind, und
b) das Handrad (50) mit einer magnetischen Rastung zusammenwirkt, welche dieses in eine Raststellung bewegt, wenn es sich in einer von der Raststellung verschiedenen Stellung befindet, wobei
c) die magnetische Rastung das Handrad (50) stabil hält, wenn es sich in der Raststellung befindet.

2. Handdensitometer nach Anspruch 2, dadurch gekennzeichnet, dass auf der Anzeigeeinheit (4) verschiedene Menüs sichtbar dargestellt sind, und dass mit Hilfe des Handrads (50) ein Menü bzw. eine einzelne Option eines Menüs dann auswählbar ist, wenn das Handrad (50) sich in der Raststellung befindet.

3. Handdensitometer nach Anspruch 2 oder 3, dadurch gekennzeichnet, dass es einen Stator (54) mit einem hohlzylindrischen Statorkörper (541) umfasst, der rotationssymetrisch um die Längsachse (500) des Handrads (50) herum angeordnet ist, und dass die magnetische Rastung derart ausgebildet ist, dass der Statorkörper (541) entlang seines Umfangs in einer Teilung mit gleichen Abständen wechselnde magnetische Pole (N,S) aufweist und das Handrad ein im wesentlichen hohlzylindrisches Rotorrohr (50) umfasst, welches koaxial zum Statorkörper (541) angeordnet ist und diesen umgibt, wobei das Rotorrohr (50) auf seiner Innenwand mit einer auf den Statorkörper (541) zuweisenden Verzahnung versehen ist, die die gleiche Zahnteilung aufweist wie die Teilung der magnetischen Pole auf dem Umfang des Statorkörpers.

4. Handdensitometer nach Anspruch 2 oder 3, dadurch gekennzeichnet, dass es zwei Statorscheiben (511,512) umfasst, die parallel zueinander angeordnet sind und sich jeweils in einer Ebene senkrecht zur Längsachse (500) des Handrads (50) rotationssymetrisch um diese Achse herum erstrecken, wobei die beiden Statorscheiben (511,512) durch einen ringförmigen Magneten (510) miteinander verbunden sind, dessen Magnetfeld im wesentlichen in Richtung der Längsachse (500) des Handrads (50) weist, und dass die magnetische Rastung so ausgebildet ist, dass das Handrad ein im wesentlichen hohlzylindrisches Rotorrohr (50) umfasst, das koaxial zu den Statorscheiben (511,512) angeordnet ist und diese umgibt, wobei die Statorscheiben mit einer nach aussen weisenden Verzahnung versehen sind und das Rotorrohr (50) auf seiner Innenwand mit zwei Verzahnungen gleicher Zahnteilung wie die der Statorscheiben (511,512) versehen ist und wobei die jeweilige Verzahnung auf der Innenwand des Rotorrohrs (50) koaxial zur entsprechenden Verzahnung der Statorscheibe (511,512) angeordnet ist.

5. Handdensitometer nach Anspruch 4 oder 5, dadurch gekennzeichnet, dass die Statorscheiben bzw. der Statorkörper auf einer Lagerhülse (52) aufsitzend befestigt sind, und dass das Rotorrohr (50) mit einer zentralen Welle (503) versehen ist, die in der Lagerhülse (52) drehbar gelagert ist und so zusammen mit dem Rotorrohr (50) gegenüber der Lagerhülse drehbar ist, und dass diese Welle (503) mit einer Detektionseinheit (53) verbunden ist, welche die jeweilige Stellung und die Drehrichtung des Rotorrohrs (50) detektiert und ein entsprechendes Signal erzeugt und zur Auswertelektronik leitet.

6. Handdensitometer nach Anspruch 6, dadurch gekennzeichnet, dass die Detektionseinheit (53) zwei ortsfest angeordnete Lichtschranken (530,531) und eine mit der zentralen Welle (503) des Rotorrohrs (50) verbundene gezahnte Scheibe (532) umfasst, welche zwischen Lichtquelle und Empfänger der Lichtschranken angeordnet ist, wobei die Lichtschranken (530,531) relativ zueinander so angeordnet sind, dass das von der einen Lichtschranke erzeugte Signal phasenverschoben, insbesondere uni 90° phasenverschoben, gegenüber dem von der anderen Lichtschranke erzeugten Signal ist.

7. Handdensitometer nach Anspruch 7, dadurch gekennzeichnet, dass die Lichtquelle der Lichtschranke als Leuchtdiode (530a,531a) und der Empfänger als Photodiode (530b,531b) ausgebildet ist, und dass zwischen der Leuchtdiode und der Photodiode eine Schlitzblende (533) angeordnet ist, deren Schlitz (533a,533b) schmal gegenüber der Breite eines Zahns der gezahnten Scheibe (533) ist, die mit dem Rotorrohr (50) verbundenen ist.

8. Handdensitometer nach einem der Ansprüche 1 bis 8, dadurch gekennzeichnet, dass die Steuereinrichtung eine Abschalt- und Aufweckelektronik (60,61) umfasst, welche die Energieversorgung (62) zumindest von Teilen des Handdensitometers nach Ablauf eines definierten Zeitintervalls, in welchem keine Zustandsänderung des Handdensitometers erfolgt ist, aus dem Betriebszustand in einen Bereitschaftszustand schaltet, und dass Aufweckmittel vorgesehen sind, die die Energieversorgung (62) bei einer Zustandsänderung des Handdensitometers sofort wieder in den Betriebszustand schaltet.

9. Handdensitometer nach Anspruch 9, dadurch gekennzeichnet, dass die Aufweckmittel eine koaxial zum ringförmigen Magneten (510) angeordnete Spule (55) umfassen, die bei einer Änderung des magnetischen Flusses, der sie durchdringt, ein entsprechendes Signal erzeugt und an die Abschalt- und Aufweckelektronik (60) leitet.

## Claims

1. Hand densitometer for measuring the colour composition of an original, having a casing (2) in which are provided a measuring device for measuring the original, a control device for controlling the measurement functions, in particular for selecting the quantities to be measured and the parameters for the measurement of the original, together with analysis electronics and a display unit (4) which displays the selected measurement functions, quantities and parameters, characterized in that
a) the control device includes a handwheel (50) which can be rotated from outside the casing (2), it being possible to select the measurement functions, the quantities to be measured and the parameters for the measurement by rotating the handwheel (50),
b) the handwheel (50) interacts with a magnetic lock system, which moves the handwheel into an locked-in position when it is located in a position different from the locked-in position, and
c) the magnetic lock system holds the handwheel (50) stably when it is in the locked-in position.

2. Hand densitometer according to Claim 1, characterized in that various menus are visually represented on the display unit (4) and in that a menu or an individual option of a menu can then be selected with the aid of the handwheel (50) when the handwheel (50) is in the locked-in position.

3. Hand densitometer according to Claim 1 or 2, characterized in that it includes a stator (54) with a stator body (541) in the form of a hollow cylinder, which stator body is arranged axisymmetrically about the longitudinal axis (500) of the handwheel (50), and in that the magnetic lock system is configured in such a way that the stator body (541) has alternating magnetic poles (N, S) along its periphery at equidistant pitch and in that the handwheel includes a rotor tube (50) substantially in the form of a hollow cylinder, which rotor tube (50) is arranged coaxially with the stator body (541) and surrounds the latter, the rotor tube (50) being provided on its inner wall with a set of teeth pointing towards the stator body (541), which set of teeth has a tooth pitch equal to the pitch of the magnetic poles on the periphery of the stator body.

4. Hand densitometer according to Claim 1 or 2, characterized in that it includes two stator discs (511, 512) which are arranged parallel to one another and which each extend in a plane at right angles to the longitudinal axis (500) ofthe handwheel (50) and axisymmetrically about this axis, the two stator discs (511, 512) being connected together by an annular magnet (510) whose magnetic field points substantially in the direction of the longitudinal axis (500) of the handwheel (50), and in that the magnetic lock system is configured in such a way that the handwheel includes a rotor tube (50) substantially in the form of a hollow cylinder, which rotor tube (50) is arranged coaxially with the stator discs (511, 512) and surrounds the latter, the stator discs being provided with a set of teeth pointing outwards and the rotor tube (50) being provided on its inner wall with two sets of teeth with a tooth pitch equal to that of the stator discs (511, 512) and the respective sets of teeth on the inner wall of the rotor tube (50) being arranged coaxially with the corresponding sets of teeth on the stator discs (511, 512).

5. Hand densitometer according to Claim 3 or 4, characterized in that the stator discs and the stator body are fastened so as to be seated on a bearing sleeve (52), and in that the rotor tube (50) is provided with a central shaft (503) which is rotatably supported in the bearing sleeve (52) and can thus be rotated together with the rotor tube (50) relative to the bearing sleeve, and in that this shaft (503) is connected to a detection unit (53) which detects the respective position and the direction of rotation of the rotor tube (50) and generates a corresponding signal which it supplies to the analysis electronics.

6. Hand densitometer according to Claim 5, characterized in that the detection unit (53) includes a stationary arrangement of two photoelectric barriers (530, 531) together with a toothed disc (532) connected to the central shaft (503) of the rotor tube (50), which disc (532) is arranged between light source and receiver of each of the photoelectric barriers, the photoelectric barriers (530, 531) being arranged relative to one another in such a way that the signal generated from one photoelectric barrier has a phase displacement, in particular a 90° phase displacement, relative to the signal generator by the other photoelectric barrier.

7. Hand densitometer according to Claim 6, characterized in that the light source of the photoelectric barrier is configured as a light-emitting diode (530a, 531a) and the receiver is configured as a photodiode (530b, 531b) and in that a slotted diaphragm (533) is arranged between the light-emitting diode and the photodiode, the diaphragm slots (533a, 533b) being narrow relative to the tooth width of the toothed disc (533) which is connected to the rotor tube (50).

8. Hand densitometer according to one of Claims 1 to 7, characterized in that the control device includes electric current cut-off and restoration electronics (60, 61) which switch the electricity supply (62) of at least parts of the hand densitometer from the operating condition into a stand-by condition after a defined time interval has elapsed during which no change to the condition of the hand densitometer has occurred, and in that electric current restoration means are provided which immediately switch the electricity supply (62) back into the operating condition when there is a change in the condition of the hand densitometer.

9. Hand densitometer according to Claim 8, characterized in that the current restoration means include a coil (55) arranged coaxially to the annular magnet (510), which coil (55) generates a corresponding signal when there is a change to the magnetic flux passing through it and supplies this signal to the electric current cut-off and restoration electronics (60).

## Revendications

1. Densitomètre à main pour mesurer la composition chromatique d'un original, comportant un boîtier (2) dans lequel sont prévus un dispositif de mesure pour mesurer l'original, un dispositif de commande pour commander les fonctions de mesure, en particulier pour le choix des grandeurs à mesurer et des paramètres pour la mesure de l'original, ainsi qu'un circuit électronique de traitement et un visuel (4) qui indique les fonctions de mesure, les grandeurs ou les paramètres choisis, caractérisé par le fait
a) que le dispositif de commande comporte une manette tournante (50) que l'on peut faire tourner de l'extérieur du boîtier (2), étant précisé qu'en faisant tourner la manette tournante (50), on peut choisir les fonctions de mesure, les grandeurs à mesurer ainsi que les paramètres pour la mesure, et
b) que la manette tournante (50) collabore avec un crantage magnétique qui l'amène en une position de crantage lorsqu'elle se trouve en une position différente de la position de crantage,
c) le crantage magnétique de la manette tournante (50) restant stable lorsqu'elle se trouve dans la position de crantage.

2. Densitomètre à main selon la revendication 1, caractérisé par le fait que sur le visuel (4) différents menus sont représentés visibles et qu'à l'aide de la manette tournante (50) on peut alors choisir un menu ou l'une des options d'un menu lorsque la manette tournante (5) se trouve dans la position de crantage.

3. Densitomètre à main selon la revendication 1 ou 2, caractérisé par le fait qu'il comporte un stator (54) qui présente un corps de stator (541) cylindrique creux et qui est disposé en symétrie de rotation autour de l'axe longitudinal (500) de la manette tournante (50), et que le crantage magnétique est conçu de façon que le corps de stator (541) présente, le long de sa périphérie, des pôles magnétiques (N,S) alternant selon une division à distances égales et que la manette tournante comporte un rotor tubulaire (50) sensiblement cylindrique creux qui est disposé coaxialement au corps de stator (551) et l'entoure, le rotor tubulaire (50) étant muni, sur sa paroi intérieure, d'une denture qui est orientée vers le corps de stator (551) et présente la même division de denture que la division des pôles magnétiques sur la périphérie du corps de stator.

4. Densitomètre à main selon la revendication 2 ou 3, caractérisé par le fait qu'il comporte deux disques de stator (511,512) qui sont disposés parallèlement l'un à l'autre et s'étendent, chacun dans un plan perpendiculaire à l'axe longitudinal (500) de la manette tournante (50), en symétrie de rotation autour de cet axe, les deux disques de stator (511,512) étant reliés l'un à l'autre par un aimant annulaire (510) dont le champ magnétique est sensiblement orienté selon la direction de l'axe longitudinal (500) de la manette tournante (50), et que le crantage magnétique est conçu de façon que la manette tournante comporte un rotor cylindrique (50), sensiblement en cylindre creux, qui est disposé coaxialement aux disques du stator (511,512) et les entoure, les disques du stator étant munis d'une denture orientée vers l'extérieur et le rotor tubulaire (50) étant muni, sur sa paroi intérieure, de deux dentures de même division de denture que celle des disques de stator (511,512) et la denture respective étant disposée, sur la paroi intérieure du rotor tubulaire (50), coaxialement à la denture correspondante du disque de stator (511,512).

5. Densitomètre à main selon la revendication 3 ou 4, caractérisé par le fait que les disques de stator ou le corps de stator sont fixés, posés sur un manchon (52) et que le rotor tubulaire (50) est muni d'un arbre central (503) qui est porté, avec liberté de rotation, dans le manchon (52) et peut ainsi tourner, en même temps que le rotor tubulaire (50), par rapport au manchon, et que cet arbre (503) est relié à un organe de détection (53) qui détecte la position respective et le sens de rotation du rotor tubulaire (50) et produit un signal approprié et l'envoie au circuit électronique de traitement.

6. Densitomètre à main selon la revendication 5, caractérisé par le fait que l'organe de détection (53) comporte deux cellules photo-électriques (530,531) disposées fixes et un disque denté (532) qui est relié à l'arbre central (503) du rotor tubulaire (50) et qui est disposé entre source lumineuse et récepteur des cellules photo-électriques, les cellules photo-électriques (530,531) étant disposées, l'une par rapport à l'autre, de façon que le signal produit par la première cellule photo-électrique soit décalé en phase, en particulier décalé en phase de 90°, par rapport au signal produit par l'autre cellule photo-électrique.

7. Densitomètre à main selon la revendication 6, caractérisé par le fait que la source lumineuse de la cellule photo-électrique est conçue sous forme de diode électroluminescente (530a,531a) et le récepteur, sous forme de photodiode (530b,531b) et qu'entre la diode électroluminescente et la photodiode est disposé un diaphragme à fente (533) dont la fente (533a,533b) est étroite par rapport à la largeur d'une dent du disque denté (533) qui est relié au rotor tubulaire (50).

8. Densitomètre à main selon la revendication 1 à 7, caractérisé par le fait que le dispositif de commande comporte un circuit électronique de mise hors circuit et d'éveil (60,61) qui, après écoulement d'un intervalle de temps défini au cours duquel il ne se produit aucune modification de l'état du densitomètre à main, fait passer l'alimentation en énergie (62) d'au moins des parties du densitomètre à main de l'état de fonctionnement à l'état de veille et que son prévus des moyens d'éveil qui, lors d'une modification de l'état du densitomètre à main, font aussitôt passés à nouveau l'alimentation en énergie (62) à l'état de fonctionnement.

9. Densitomètre à main selon la revendication 8, caractérisé par le fait que les moyens d'éveil comportent une bobine (55) qui est disposée coaxialement à l'aimant annulaire (510) et qui, lors d'une modification du flux magnétique qui la traverse, produit un signal approprié et l'envoie au circuit électronique de mise hors circuit et d'éveil (60).
